# EUROPEAN PATENT SPECIFICATION

(11) **EP 0 525 449 B1**
(45) Date of publication and mention of the grant of the patent: **01.05.1996**
(21) Application number: 92111508.5
(22) Date of filing: 07.07.1992
(51) Int. Cl.: F17C 13/04, F16K 1/30

(54) **Throw-away valve with charge proof device for gas bottles under pressure**
Wegwerfventil mit Bauteilen zur Verhinderung des Nachfüllens von Druckgasflaschen
Vanne jetable avec dispositif pour éviter de recharger des bouteilles à gaz comprimé

(30) Priority: 02.08.1991 IT RE910063 U
(43) Date of publication of application: 03.02.1993
(73) Proprietor: EUROTRE S.r.l., I-42100 Reggio Emilia (IT)
(72) Inventor: Reverberi, Davive, I-42100 Reggio Emilia (IT)
(74) Representative: Lecce, Giovanni

(56) References cited:
- DE-A- 3 611 588
- US-A- 3 589 397
- US-A- 3 985 332

## Description

The present invention relates to a throw-away valve with charge proof device for gas bottles under pressure substantially consisting of an external body with double coaxial and longitudinal chamber in which in the upper part is the seat of a pin complete with annular seal for control of gas flow and closing beat and in the lower part is located a piston coaxial and integral with said pin and also equipped with an annular seal on the collar passage seat.

Beneath said piston are located a counteracting spring which holds it pressed against the collar passage seat and a lower stop with length such that it allows the upper pin sufficient travel to open the collar passage seat but less than that which could cause cutting of the ring seal of the pin if it were pressed very deeply.

The valve is applicable to nonrechargeable bottles by rivetting or starting with seal means.

It is known that in recharging many types of gas bottles, especially if there are used for this operation inappropriate equipment and accessories, very dangerous situations arise. For this reason there have been developed and are fairly widespread nonrechargeable bottles for gas under pressure.

Said bottles or containers are substantially the type to be thrown away after use of their contents.

Said bottles are equipped with valves through which it is possible to supply to the outside the gas required for use but which allow the reverse operation, i.e. it is not possible to recharge them.

A throw-away valve with charge proof device for gas bottles under pressure is disclosed in DE-A-3611588 in the name of the same applicant. This document discloses a trow-away valve such as defined in the preamble of claim 1.

It has been found that under particular conditions there are users who manage to recharge said containers by means of pumps or other accessories while holding the valves open for a time sufficient for recharging and to do this they tamper with the containers, pressing the opening pin from the passage seat enough to cut the flow regulation and closing beat seal which theretofore prevented recharging.

These operations, also done with inappropriate means and under makeshift conditions, in addition to constituting in themselves a danger, lead to the use of tampered containers for gas under pressure which do not have the integrity of their original configuration and which therefore can cause subsequent leaks, inflammability and explosion. All this is done to recover containers which, taken altogether, were conceived in a simple and economical manner just to prevent their recovery.

The object of the present invention is to eliminate the above drawbacks.

According to the present invention, the above and other objects are achieved by the features in the characterizing part of claim 1.

By the valve of the throw-away type with charge proof device for gas bottles under of the present invention the following results and advantages pressure of the present invention the following results and advantages are obtained : the valve pin is equipped with an annular seal on the stem which strikes against and closes the collar passage seat upon use in an attempted refilling. Said pin, when it has reached its closing position, cannot continue its descending travel because of the presence of a lower stop. Limitation of this travel, while allowing closing seal of the collar passage seat, prevents the annular seal from being cut along the edge of the seat. The pin with seal allows normal application of distribution valves and pressure reducers of the same type as those usually adopted on known valves. The pin configured in this manner ensures that the container of gas under pressure on which the corresponding valve is mounted cannot be recharged in any manner.

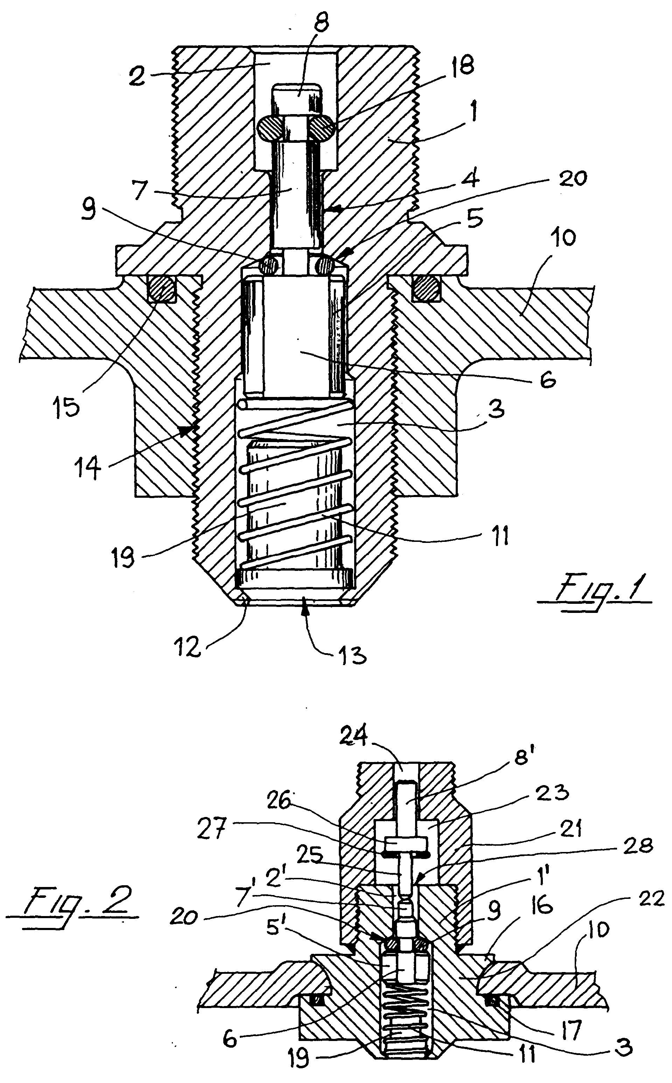

The invention is described below in detail with reference to the annexed drawing wherein: -
FIG. 1 shows a cross section view of a distribution valve complete with charge proof device with threaded union on the bottle, and
FIG. 2 shows a cross section of an charge proof device for gas bottles of the separate type constrained rigidly in coaxial alignment with a traditional distribution valve but with lower stop.

The FIGS. show a pressurized gas bottle valve of the throw-away type with charge proof device and substantially consisting of a body (1) in which are made sequentially and coaxially an upper chamber (2) and a lower chamber (3) connected together through a coaxial intermediate passage seat (4) with lower preferably tapered countersink (20).

Inside the lower chamber (3) is inserted a piston (5) on which are preferably present lateral faceting (6) and with which is integral the stem (7) of a pin (8) which through said passage seat (4) extends into the upper chamber (2).

Between the connection of the piston (5) and of the stem (7) and opposite the tapered countersink (20) is positioned a first annular seal (9) which, with the bottle (10) full of gas under pressure, forms a seal against the collar passage seat (4). The seal is ensured either by the pressure against the bottom of the piston (5) or by the tapered configuration (20) of the above mentioned countersink and also by the action of a lower counteracting spring (11) which is placed between the bottom of said piston and the annular support edge (12) delimiting the passage hole (13) which connects the body (1) of the valve with the inside of the bottle (10).

Connection and constraint between the valve body (1) and the bottle (10) can be provided by a screw coupling (14) with seal (15) and optionally spot welding or by peripheral rivetting (16) with application of a seal (17).

On the stem (7) of the pin (8) is placed a second annular seal (18) whose function is to close the passage seat (4) in case of forced loading of the pin (8) with the intention of making a travel downward to allow connection from the outside to the inside of the bottle (10) to carry out recharging.

The annular seal (18) can have a circular cross section as shown in the figures or rectangular or with flexible peripheral lip.

Under normal operating conditions the downward travel of the pin (8) and hence of its stem (7), of the annular seal (9), the piston (5) and the spring (11) is accomplished by connection with a traditional distribution valve and/or pressure reducer with which, by pressing the pin (8) downward, is generated passage of the gas from the bottle (10) to the outside through the passage hole (13), the channels provided by the lateral faceting (6) of the piston (5), the collar passage seat (4) freed from said annular seal (9) and the space between the inner surface of the upper chamber (2) and the annular seal (18) of the pin (8).

Each time the distribution valve or pressure reducer is removed from said valve (1) the pin (8) is no longer pressed downward so that, together with its stem (7) and piston (5) it is pushed back upward and the piston can return to pressing the annular seal (9) against the tapered countersink (20), blocking gas outflow.

It is pointed out that the counteracting spring (11) could be omitted because, as long as there is pressurized gas in the bottle (10) the piston (5) is pressed against the annular seal (9) which forms a seal against said tapered countersink (20) whereas when the gas is exhausted the piston (5) can fall back because the seal is no longer required.

To prevent cutting of the annular seal (18) against the edge of the annular passage seat (4) by tampering and hence possible access to the inside of the bottles (10) to execute recharging, downward travel of the pin (8) is limited by application of a lower stop (19) against which the piston (5) stops.

Therefore, with said lower stop any action exerted on the pin (8) is limited to the active travel which, at most, opens the passage seat (4) for delivery of gas from the inside outward but does not allow application of recharging means.

Similarly to the solution in which the pin (8) is integral with the stem (7) guiding the piston (5) for traditional valves the charge proof device applicable has substantially the same characteristics.

It consists of an external cap (21) which is screwed and fixed on the tube (1') of the valve (22). In the cap (21) is made a chamber (23) coaxial with the upper one (2') of the tube (1').

The cap (21) is constrained rigidly to the valve (22) in such a manner that it cannot be removed. Inside the chamber (23) is inserted the pin (8') which is guided at the ends by the upper chamber (2') of the valve (22) and by the upper delivery duct (24) of the cap (21).

The end (25) of the pin (8') is in contact with the upper pin (7') of the piston (5').

In operation the distribution valve or pressure reducer presses downward on the pin (8') which in turn presses on the pin (7') of the piston (5') which, in moving, detaches the annular seal (9) from the tapered countersink (20).

The gas contained in the bottle (10) can thus flow out passing along the channels provided by the faceting (6), the chamber (23), the mouth (28), the chamber (23) and the delivery duct (24) of the cap (21).

During delivery of the gas the intermediate ring (26) with seal (27) on the pin (8') moves downward enough to allow delivery without occluding the discharge mouth (28).

In case of attempts to recharge the empty bottle (10) the pin (8') and the piston (5') are pressed inward but the seal (27) occludes the passage or mouth (28) and this position remains with no fear that said seal might be broken or cut because the travel of the piston (5') is limited by the lower stop (19).

## Claims

1. A throw-away valve with charge proof device for gas bottles under pressure applied to a bottle (10) and comprising:
- an upper (2,2') and a lower (3) coaxial chamber connected together through an intermediate collar passage (4) having a lower tapered countersink (20);
- a piston (5,5') having lateral faceting (6) and an upper stem (7,7'), arranged inside the lower chamber (3), said upper stem (7,7') extending into the upper chamber (2) through the passage (4);
- an upper pin (8,8') integral and coaxial with said stem (7,7') positioned inside said upper chamber (2);
- a first annular seal (9) positioned between the connection of the piston (5,5') and the stem (7,7'), opposite the tapered countersink (20);
- a second annular seal (18,27) placed on the stem (7) and
- optionally a spring (11) placed between the bottom of the piston (5,5') and the annular support edge (12) delimiting the passage (13) which connects the body (1) of the valve with the inside of the bottle (10)
characterized in that said throw-away valve comprises a lower stopping means (19) stopping the downward travel of the piston (5;5') applied in the lower zone of the lower chamber (3) and having a length limiting the downward travel of the pin (8,8') and the piston (5,5') to prevent the cutting or breaking of the second annular seal (18) against the edge of the annular passage (4).

2. The throw-away valve according to claim 1, characterized in that under conditions of outward flow of gas from the bottle, the second annular seal (18) is arranged in an intermediate position not in contact with the outlet of the collar passage (4) and, in condition of forced loading of the pin (8), it closes the outlet of the collar passage (4) without its cutting or breaking.

3. The throw-away valve according to claim 1 or 2, characterized in that the second annular seal (18) has a circular cross-section.

4. The throw-away valve according to claim 1 or 2, characterized in that the second annular seal (18) has a rectangular cross section.

5. The throw-away valve according to anyone of the preceding claims characterized in that the second annular seal (18) has a flexible peripheral lip.

6. The throw-away valve according to claim 1, characterized in that the pin (8') is separated from the stem (7') and it comprises an intermediate ring (26) provided with a seal (27) which occludes the outlet of the passage (28) at the full travel downwardly of the pin (8') corresponding to the striking of the bottom of the piston (5) against the lower stopping means (19).

## Patentansprüche

1. Ventil des Wegwerftyps mit füllsicherer Einrichtung für unter Druck stehende Flaschen in Verbindung mit einer Flasche (10) und umfassend:
- eine obere (2,2') und eine untere (3) koaxiale Kammer, die miteinander durch einen Zwischen-Durchgangsschiebesitz (4) mit einer unteren kegeligen Versenkung (20) verbunden sind;
- einen Kolben (5,5') mit Seitenflächen (6) und einem oberen Schaft (7,7'), der in der unteren Kammer (3) angeordnet ist, wobei sich der obere Schaft (7,7') in die obere Kammer (2) durch den Durchgang (4) erstreckt;
- einen oberen Stift (8,8'), der einstückig mit und koaxial zu dem Stift (7,7') in der oberen Kammer (2) angeordnet ist;
- eine erste ringförmige Dichtung (9), die zwischen der Verbindung des Kolbens (5,5') und des Schafts (7,7') gegenüber der kegeligen Versenkung (20) angeordnet ist;
- eine zweite ringförmige Dichtung (18,27), die auf dem Schaft (7) angeordnet ist, und
- wahlweise eine Feder (11), die zwischen dem Boden des Kolbens (5,5') und der ringförmigen Stützkante angeordnet ist, welche den Durchgang (13) begrenzt, der den Körper (1) des Ventils mit dem Inneren der Flasche (10) verbindet,
**dadurch gekennzeichnet**,
daß das Ventil des Wegwerftyps einen unteren Anschlag (19) umfaßt, der die Abwärtsbewegung des Kolbens (5,5') begrenzt, der in der unteren Zone der unteren Kammer (3) angebracht ist, und eine Länge hat, welche die Abwärtsbewegung des Stifts (8,8') und des Kolbens (5,5') begrenzt, um das Schneiden oder Brechen der zweiten ringförmigen Dichtung (18) gegen die Kante des ringförmigen Durchgangs zu verhindern.

2. Ventil des Wegwerftyps nach Anspruch 1,
**dadurch gekennzeichnet**,
daß im Betriebszustand des Ausströmens von Gas aus der Flasche die zweite ringförmige Dichtung (18) in einer Zwischenstellung nicht in Berührung mit dem Auslaß des Durchgangsschiebesitzes (4) angeordnet ist, und daß er im Betriebszustand der Zwangsbelastung des Stifts (8) den Auslaß des Durchgangsschiebesitzes (4) ohne Schneiden oder Brechen verschließt.

3. Ventil des Wegwerftyps nach Anspruch 1 oder 2,
**dadurch gekennzeichnet**,
daß die zweite ringförmige Dichtung (18) einen kreisförmigen Querschnitt aufweist.

4. Ventil des Wegwerftyps nach Anspruch 1 oder 2,
**dadurch gekennzeichnet**,
daß die zweite ringförmige Dichtung (18) einen rechteckförmigen Querschnitt aufweist.

5. Ventil des Wegwerftyps nach einem der vorangehenden Ansprüche,
**dadurch gekennzeichnet**,
daß die zweite ringförmige Dichtung (18) eine flexible äußere Lippe aufweist.

6. Ventil des Wegwerftyps nach Anspruch 1,
**dadurch gekennzeichnet**,
daß der Stift (8') von dem Schaft (7') getrennt ist und daß es einen Zwischenring (26) umfaßt, der mit einer Dichtung (27) versehen ist, welche den Auslaß des Durchgangs (28) bei der vollen Abwärtsbewegung des Stifts (8') entsprechend dem Anschlag des Bodens des Kolbens (5) gegen die unteren Anschlagmittel (19) verschließt.

## Revendications

1. Vanne jetable avec dispositif pour éviter de recharger des bouteilles à gaz comprimé, installée sur une bouteille (10) et comprenant :
- une chambre coaxiale supérieure (2,2') et une chambre coaxiale inférieure (3) reliées entre elles par un passage à collier intermédiaire (4) possédant une fraisure inférieure conique (20) ;
- un piston (5,5') présentant un facettage latéral (6) et une tige supérieure (7,7'), disposée dans la chambre inférieure (3), ladite tige supérieure (7,7') s'étendant dans la chambre supérieure (2) à travers le passage (4) ;
- une goupille supérieure (8,8') solidaire et coaxiale de ladite tige (7,7') positionnée à l'intérieur de ladite chambre supérieure (2) ;
- un premier joint torique (9) positionné entre la connexion du piston (5,5') et la tige (7,7'), en face de la fraisure conique (20) ;
- un second joint torique (18, 27) placé sur la tige (7) et
- facultativement un ressort (11) placé entre le bas du piston (5,5') et le rebord annulaire support (12) délimitant le passage (13) qui relie le corps (1) de la vanne avec l'intérieur de la bouteille (10)
caractérisée en ce que ladite vanne jetable comporte des moyens d'arrêt inférieurs (19), arrêtant le piston (5, 5') dans sa course vers le bas, installés dans la zone inférieure de la chambre inférieure (3), et ayant une longueur limitant la course vers la bas de la goupille (8, 8') et du piston (5, 5') afin d'empêcher la coupure ou la cassure du second joint torique (18) contre le bord du passage annulaire (4).

2. Vanne jetable selon la revendication 1, caractérisée en ce que dans des conditions de flux de gaz de la bouteille vers l'extérieur, le second joint torique (18) est disposé dans une position intermédiaire qui n'est pas en contact avec la sortie du passage à collier (4) et en ce que, dans la condition de charge forcée de la goupille (8), il ferme la sortie du passage à collier (4) sans se couper ni se casser.

3. Vanne jetable selon la revendication 1 ou 2, caractérisée en ce que le second joint torique (18) présente une section circulaire.

4. Vanne jetable selon la revendication 1 ou 2, caractérisée en ce que le second joint torique (18) présente une section rectangulaire.

5. Vanne jetable selon l'une quelconque des revendications précédentes, caractérisée en ce que le second joint torique (18) possède une lèvre périphérique flexible.

6. Vanne jetable selon la revendication 1, caractérisée en ce que la goupille (8') est indépendante de la tige (7') et comporte un anneau intermédiaire (26) muni d'un joint (27) qui obture la sortie du passage (28) au point bas de la course complète de la goupille (8') correspondant à la butée du bas du piston (5) contre les moyens d'arrêt inférieurs (19).
